# FASCICULE DE BREVET EUROPEEN

(11) **EP 2 627 824 B1**
(45) Date de publication et mention de la délivrance du brevet: **05.08.2015**
(21) Numéro de dépôt: 11768038.9
(22) Date de dépôt: 14.10.2011
(51) Int. Cl.: E01B 11/52, E01B 29/44, B23K 23/00

(54) **PROCEDE ET DISPOSITIF POUR LA SOUDURE ALUMINOTHERMIQUE DE RAILS**
VERFAHREN UND VORRICHTUNG ZUM ALUMINOTHERMISCHEN SCHWEISSEN VON SCHIENEN
METHOD AND DEVICE FOR THE ALUMINOTHERMIC WELDING OF RAILS

(30) Priorité: 15.10.2010 FR 1058413
(43) Date de publication de la demande: 21.08.2013
(73) Titulaire: Railtech International, 59590 Raismes (FR)
(72) Inventeur: WINIAR, Lionel, F-59790 Ronchin (FR); THURU, Jean-Jacques, décédé (FR)
(74) Mandataire: Regimbeau
(86) Numéro de dépôt international: PCT/EP2011/067958
(87) Numéro de publication internationale: WO 2012/049282

(56) Documents cités:
- EP-B1- 0 407 240
- WO-A1-2009/065864
- DE-C- 729 580
- US-B1- 6 227 282

## Description

### DOMAINE DE L'INVENTION

La présente invention concerne un procédé et un dispositif de soudure aluminothermique de rails.

### ARRIERE PLAN DE L'INVENTION

La soudure aluminothermique est un procédé employé de longue date pour solidariser des rails de chemin de fer mis bout à bout.

A cet effet, on dispose autour des extrémités des rails à souder un moule formé généralement de trois parties principales, on place sur ledit moule un creuset contenant une charge aluminothermique puis on allume ladite charge de manière à déclencher la réaction aluminothermique.

Le métal en fusion issu de cette réaction s'écoule alors dans le moule et remplit l'empreinte de moulage.

Après la solidification du métal et le retrait du moule, l'excédent de métal est retiré et la région de soudure est polie pour présenter une bonne continuité avec le profil des rails.

Cependant, avec ce procédé, la nature du métal de soudure est identique dans toute la région de soudure, du patin jusqu'au champignon de rail.

Or, il est souhaitable, dans certaines applications, de disposer, au niveau du champignon de rail, d'un métal de soudure ayant des propriétés mécaniques différentes, et notamment qui ait une plus grande dureté.

Ainsi, pour les lignes de chemin de fer destinées au fret, sur lesquelles les rails sont plus sollicités, on utilise des rails durcis au niveau du champignon afin d'allonger leur durée de vie.

Il est donc souhaitable que la soudure présente un profil de dureté comparable à celui des rails, c'est-à-dire une plus grande dureté dans la région du champignon et une plus grande ductilité dans la région du patin.

A cet effet, le brevet US 6,227,282 a déjà décrit un procédé de soudure aluminothermique dans lequel on déclenche une réaction aluminothermique dans un creuset puis on fait couler le métal issu de cette réaction dans le moule, dans lequel on a préalablement disposé, par l'intermédiaire de la traverse du moule, des additifs d'alliage comprenant un agent durcissant.

Les additifs peuvent se présenter sous la forme d'une poudre, contenue dans une capsule supportée par la traverse ou insérée dans un évidement de la traverse.

Le récipient contenant les additifs doit être positionné en fonction du type de coulée (montante ou tombante) de telle sorte que seul le métal destiné à former la région du champignon vienne en contact avec lui, afin que l'alliage du métal aluminothermique avec les additifs comprenant l'agent durcissant n'ait lieu que dans la région du champignon.

Cependant, si ce procédé semble en théorie avantageux, il ne permet pas, en pratique, d'obtenir le durcissement localisé escompté.

En effet, il s'avère que l'agent durcissant diffuse dans l'ensemble de l'empreinte de moulage, de sorte que l'on obtient une dureté essentiellement homogène sur toute la hauteur du rail.

Un but de la présente invention est donc de procurer un procédé de soudure aluminothermique qui permette de durcir la soudure de manière localisée au niveau du champignon du rail avec une bonne fiabilité et une bonne reproductibilité.

Un autre but de l'invention est de concevoir un dispositif simple et robuste qui permette la mise en oeuvre de ce procédé.

### BREVE DESCRIPTION DE L'INVENTION

Conformément à l'invention, il est proposé un procédé pour la soudure aluminothermique de rails, dans lequel deux extrémités de rails à souder sont entourées par un moule de soudure définissant une empreinte de moulage, comprenant les étapes de :
- déclenchement d'une réaction aluminothermique dans un creuset,
- coulée du métal issu de ladite réaction dans le moule, de sorte à remplir l'empreinte de moulage à partir du patin de rail,
ledit procédé comprenant, après le remplissage de l'empreinte, une étape de déclenchement d'une deuxième réaction aluminothermique au-dessus du champignon de rail, et la coulée du métal issu de ladite réaction dans l'empreinte dans la région du champignon de rail.

De manière particulièrement avantageuse, la deuxième réaction aluminothermique est déclenchée à partir d'une deuxième charge aluminothermique contenue dans un creuset dit secondaire situé, dans le moule, au-dessus du champignon de rail.

De préférence, la charge aluminothermique utilisée dans la deuxième réaction est différente de la charge aluminothermique utilisée dans la première réaction.

Notamment, la charge aluminothermique utilisée dans la deuxième réaction comprend avantageusement au moins un agent durcissant, tel que du vanadium.

Le déclenchement de la deuxième réaction aluminothermique est effectué par la simple mise en contact de la charge aluminothermique avec le métal fondu issu de la première réaction aluminothermique.

Un autre objet de l'invention est un moule pour la soudure aluminothermique de rails, adapté pour s'emboîter sur les deux extrémités de rails de manière à former une empreinte de moulage, comprenant un creuset dit secondaire agencé au-dessus de la région du champignon de rail de sorte à être alimenté en métal fondu de l'empreinte par un canal secondaire.

Ledit creuset secondaire repose avantageusement sur des rebords agencés dans le moule.

Par ailleurs, le creuset secondaire présente un orifice de coulée pouvant être obturé par un bouchon thermofusible.

Le moule est typiquement est en un matériau à usage unique.

Il comprend en outre au moins une pipe de remplissage s'étendant entre la partie supérieure du moule et une région inférieure de l'empreinte de manière à réaliser une coulée montante.

L'invention concerne enfin un dispositif pour la soudure aluminothermique de rails, comprenant un moule tel que décrit précédemment et un creuset de réaction aluminothermique adapté pour être posé sur le moule.

Un tel dispositif est adapté pour la mise en oeuvre du procédé décrit plus haut.

### BREVE DESCRIPTION DES DESSINS

D'autres caractéristiques et avantages de l'invention ressortiront de la description détaillée qui va suivre, en référence aux dessins annexés sur lesquels :
- la figure 1 est une vue en coupe d'un dispositif de soudure aluminothermique conforme à l'invention,
- la figure 2 est une vue en coupe d'un moule de soudure aluminothermique conforme à l'invention.

### DESCRIPTION DETAILLEE DE L'INVENTION

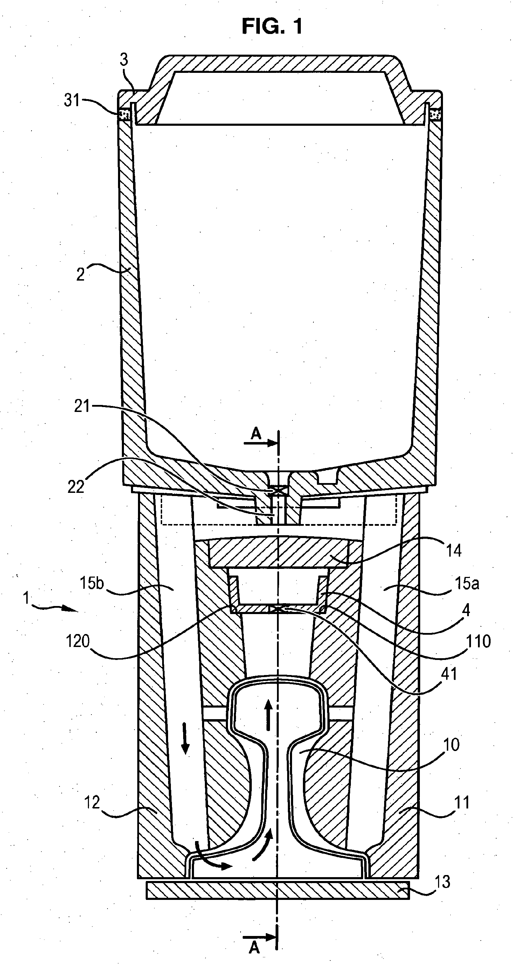

En référence à la figure 1, le dispositif de soudure aluminothermique comprend un moule 1 définissant l'empreinte de moulage, un creuset 2 de réaction aluminothermique et un couvercle 3 de creuset.

Dans le dispositif illustré, le moule 1 comprend principalement trois parties qui définissent l'empreinte de moulage 10, à savoir deux demi-coquilles 11, 12 sensiblement symétriques destinées à être positionnées de part et d'autre des rails, et une plaque de fond 13 destinée à être positionnée sous le patin de rail.

De manière avantageuse, ces différentes parties 11, 12, 13 sont en un matériau à usage unique, tel que du sable aggloméré.

De manière également connue en soi, des pièces métalliques (non représentées) permettent de maintenir en place les différentes parties pendant la soudure.

Il est à noter que le moule peut être constitué d'un nombre différents de parties (typiquement, de deux à cinq) selon la conception adoptée par l'homme du métier en fonction du type de procédé et de la forme des rails, sans pour autant sortir de la portée de la présente invention.

Le moule 1 comporte également, sous l'orifice de remplissage, une traverse 14 qui se présente typiquement sous la forme générale d'une plaque dont la fonction est de défléchir le flux de métal fondu vers les pipes 15a, 15b de remplissage du moule qui sont déportées par rapport à l'orifice de remplissage.

La traverse 14 repose sur des rebords prévus à cet effet dans les demi-coquilles 11, 12.

Le moule comporte en outre un creuset secondaire 4 destiné à recevoir une charge aluminothermique secondaire contenant au moins un agent durcissant en plus de la composition conventionnelle de la charge.

Le creuset secondaire 4 se présente avantageusement sous la forme générale d'un récipient ouvert dans sa partie supérieure, et présentant un fond pourvu d'un orifice de coulée 40 qui est obturé par un bouchon 41, par exemple un bouchon thermofusible.

Dans la configuration illustrée, le creuset secondaire 4 présente une forme parallélépipédique mais il va de soi que toute autre forme appropriée, par exemple ovoïde, sans pour autant sortir de la portée de l'invention.

De préférence, le creuset secondaire 4 est, comme les autres pièces du moule 1, en un matériau à usage unique tel que du sable aggloméré.

Le creuset secondaire 4 repose sur des rebords 110, 120 prévus à cet effet dans les demi-coquilles 11, 12.

Il est donc situé sous la traverse 14 mais est indépendant de celle-ci.

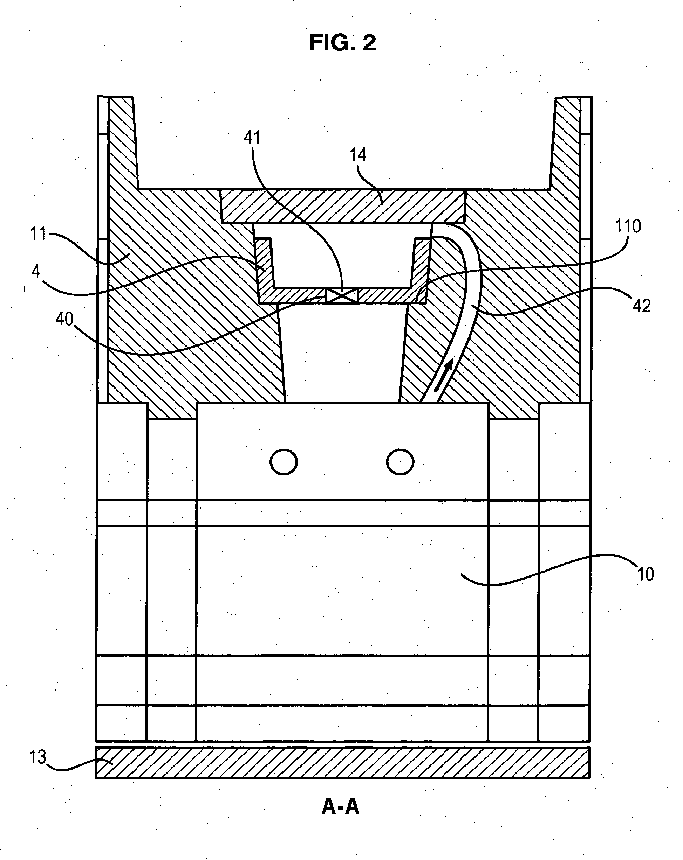

Par ailleurs, un canal secondaire 42, visible à la figure 2, est ménagé dans les demi-coquilles 11, 12 pour faire communiquer la partie supérieure de l'empreinte 10 (au-dessus du champignon de rail) et la partie supérieure du creuset secondaire 4.

Le creuset 2 est un récipient présentant une forme générale de pot, destiné à recevoir une charge aluminothermique pour former le métal de soudure.

Le creuset est de préférence en un matériau à usage unique, tel que du sable aggloméré.

Le fond du creuset 2 est pourvu d'un orifice de coulée 22 qui est de préférence obturé par un bouchon 21 thermofusible.

De manière particulièrement avantageuse, les formes du moule 1 et du creuset 2 coopèrent pour permettre de poser directement le creuset sur le moule. On pourra à cet égard se référer au brevet EP 0 407 240 au nom de la demanderesse, qui fournit par ailleurs à l'homme du métier de nombreux autres détails sur la façon de réaliser et d'utiliser un creuset et un moule pour réaction aluminothermique.

De préférence, le creuset 2 est fermé par un couvercle 3 qui permet d'éviter la projection de particules pendant la réaction aluminothermique.

Comme exposé dans le brevet EP 1 534 459 au nom de la demanderesse, le bord inférieur du couvercle 3 est avantageusement muni d'une garniture filtrante 31 par l'intermédiaire de laquelle il repose sur le bord supérieur du creuset.

Cette garniture filtrante 31 permet d'évacuer les gaz issus de la réaction aluminothermique tout en les filtrant.

Selon une variante de réalisation (non illustrée), le couvercle peut présenter un orifice pour l'introduction d'un dispositif d'allumage de la charge aluminothermique.

Le couvercle 3 du creuset 2 est de préférence en un matériau à usage unique, tel que du sable aggloméré.

Le procédé de soudure mis en oeuvre au moyen du dispositif qui vient d'être décrit comprend les étapes suivantes.

Dans un premier temps, on met en place les parties 11, 12, 13 du moule autour des extrémités des rails à souder et l'on insère dans le creuset secondaire 4 la charge aluminothermique contenant l'agent durcissant.

On positionne le creuset 2 contenant la charge aluminothermique principale au-dessus du moule 1 de sorte que l'orifice 22 de coulée du creuset se trouve en vis-à-vis de l'orifice de remplissage du moule.

On procède ensuite à l'allumage de la charge aluminothermique principale (non illustrée ici) contenue dans le creuset 2:

Selon les cas, on peut placer un allumeur à l'intérieur du creuset puis refermer le couvercle, ou bien insérer l'allumeur à travers un orifice ménagé à cet effet dans le couvercle.

Lorsque la réaction aluminothermique se déclenche, elle produit du métal en fusion et des scories qui, en raison de leur faible densité, flottent au-dessus du métal.

Le bouchon thermofusible 21 qui obturait l'orifice de coulée 22 du creuset fond et permet la coulée du métal dans le moule.

Le métal entre dans le moule par l'orifice de remplissage et rencontre la traverse 14, qui dévie le flux de métal vers les pipes de remplissage 15a, 15b.

Il s'agit ainsi d'un procédé de coulée montante, c'est-à-dire que le métal descend dans les pipes 15a, 15b et pénètre dans l'empreinte 10 par la région du patin, puis remonte dans l'empreinte en direction du champignon. Ce trajet est représenté par les flèches sur la figure 1.

Comme on peut le voir à la figure 2, qui est une vue en coupe selon A-A du moule de la figure 1, une fois que le métal a atteint le champignon, il rencontre le canal secondaire 42 qui l'amène dans le creuset secondaire 4 (trajet illustré par les flèches).

La mise en contact du métal fondu avec la charge aluminothermique secondaire (non illustrée ici) déclenche la réaction aluminothermique secondaire sans qu'un allumage spécifique soit nécessaire.

Le métal formé par cette seconde réaction, qui comprend l'agent durcissant, fait fondre le bouchon thermofusible 41 et s'écoule dans l'empreinte de moulage.

Dans la mesure où celle-ci est déjà remplie du métal provenant de la réaction aluminothermique principale, le métal additionnel diffuse de façon contrôlée et reste localisé dans la région du champignon.

Par conséquent, on obtient ainsi une soudure durcie au niveau du champignon mais plus ductile au niveau du patin de rail.

La charge aluminothermique secondaire est dimensionnée, en termes de volume et de teneur en agent durcissant, pour procurer une quantité limitée de métal additionnel et pour conférer au champignon la dureté souhaitée.

De manière conventionnelle, une fois que le métal a suffisamment durci, on retire les parties 11, 12, 13 du moule, qui peuvent être détruites, puis l'on effectue la finition de la portion soudée pour assurer une bonne continuité avec les rails.

On précise que, contrairement à ce que pourrait craindre l'homme du métier en générant une réaction aluminothermique secondaire à l'intérieur du moule, les scories issues de cette réaction ne polluent pas le métal de soudure.

En effet, le corindon produit par la réaction aluminothermique ayant lieu dans le creuset secondaire, qui est au-dessus de la masselotte, a tendance à décanter vers le haut mais est au moins partiellement retenu par la traverse 14.

En revanche, il ne descend pas dans l'empreinte de moulage en raison de sa densité nettement inférieure à celle de l'acier

Il n'est pas nécessaire de prévoir une extraction du corindon issu de la réaction aluminothermique secondaire puisque, même en restant dans le creuset secondaire, le corindon reste confiné environ six centimètres au-dessus du sommet du champignon et n'exerce ainsi aucune influence néfaste sur la soudure.

Enfin, il va de soi que l'exemple que l'on vient de donner n'est qu'une illustration particulière en aucun cas limitative quant à la façon dont l'invention peut être mise en oeuvre, dans le cadre défini par les revendications.

## Revendications

1. Procédé pour la soudure aluminothermique de rails, dans lequel deux extrémités de rails à souder sont entourées par un moule (1) de soudure définissant une empreinte de moulage, comprenant les étapes de :
- déclenchement d'une réaction aluminothermique dans un creuset (2),
- coulée du métal issu de ladite réaction dans le moule (1), de sorte à remplir l'empreinte de moulage à partir du patin de rail,
**caractérisé en ce qu'**il comprend, après le remplissage de l'empreinte, une étape de déclenchement d'une deuxième réaction aluminothermique au-dessus du champignon de rail, et la coulée du métal issu de ladite réaction dans l'empreinte dans la région du champignon de rail.

2. Procédé selon la revendication 1, **caractérisé en ce que** la charge aluminothermique utilisée dans la deuxième réaction est différente de la charge aluminothermique utilisée dans la première réaction.

3. Procédé selon la revendication 2, **caractérisé en ce que** la charge aluminothermique utilisée dans la deuxième réaction comprend au moins un agent durcissant, tel que du vanadium.

4. Procédé selon l'une des revendications 1 à 3, **caractérisé en ce que** le déclenchement de la deuxième réaction aluminothermique est effectué par la simple mise en contact de la charge aluminothermique avec le métal fondu issu de la première réaction aluminothermique.

5. Moule (1) pour la soudure aluminothermique de rails, adapté pour s'emboîter sur les deux extrémités de rails de manière à former une empreinte de moulage (10), **caractérisé en ce qu'**il comprend un creuset (4) dit secondaire agencé au-dessus de la région du champignon de rail de sorte à être alimenté en métal fondu de l'empreinte (10) par un canal secondaire (42).

6. Moule selon la revendication 5, **caractérisé en ce que** le creuset secondaire (4) repose sur des rebords (110, 120) agencés dans le moule.

7. Moule selon l'une des revendications 5 ou 6, **caractérisé en ce que** le creuset secondaire (4) présente un orifice de coulée (40) obturé par un bouchon (41) thermofusible.

8. Moule selon l'une des revendications 5 à 7, **caractérisé en ce qu'**il est en un matériau à usage unique.

9. Moule selon l'une des revendications 5 à 8, **caractérisé en ce qu'**il comprend au moins une pipe de remplissage (15a, 15b) s'étendant entre la partie supérieure du moule et une région inférieure de l'empreinte de manière à réaliser une coulée montante.

10. Dispositif pour la soudure aluminothermique de rails, comprenant un moule (1) selon l'une des revendications 5 à 9 et un creuset (2) de réaction aluminothermique adapté pour être posé sur ledit moule (1).

## Patentansprüche

1. Verfahren zum aluminothermischen Schweißen von Schienen, wobei zwei zu schweißende Schienenenden von einer Schweißform (1) eingeschlossen sind, die einen Formabdruck definiert, das die folgenden Schritte umfasst:
- Auslösen einer aluminothermischen Reaktion in einem Tiegel (2),
- Gießen des Metalls aus der Reaktion in die Form (1), so dass der Formabdruck ausgehend vom Schienenfußt gefüllt wird,
**dadurch gekennzeichnet, dass** es nach dem Füllen des Abdrucks einen Schritt des Auslösens einer zweiten aluminothermischen Reaktion über dem Schienenkopf und das Gießen des Metalls aus der Reaktion im Abdruck in der Region des Schienenkopfs umfasst.

2. Verfahren nach Anspruch 1, **dadurch gekennzeichnet, dass** sich die in der zweiten Reaktion verwendete aluminothermische Charge von der in der ersten Reaktion verwendeten aluminothermischen Charge unterscheidet.

3. Verfahren nach Anspruch 2, **dadurch gekennzeichnet, dass** die in der zweiten Reaktion verwendete aluminothermische Charge mindestens ein härtendes Mittel wie Vanadium umfasst.

4. Verfahren nach einem der Ansprüche 1 bis 3, **dadurch gekennzeichnet, dass** das Auslösen der zweiten aluminothermischen Reaktion durch einfaches Inkontaktversetzen der aluminothermischen Charge mit dem geschmolzenen Metall aus der ersten aluminothermischen Reaktion erfolgt.

5. Form (1) für das aluminothermische Schweißen von Gleisen, die ausgebildet ist, um auf den zwei Gleisenden zu rasten, so dass ein Formabdruck (10) gebildet wird, **dadurch gekennzeichnet, dass** sie einen sekundären Tiegel (4) umfasst, der über der Region des Schienenkopfs derart ausgebildet ist, dass er durch einen sekundären Kanal (42) mit geschmolzenem Metall des Abdrucks (10) versorgt wird.

6. Form nach Anspruch 5, **dadurch gekennzeichnet, dass** der sekundäre Tiegel (4) auf in der Form ausgebildeten Rändern (110, 120) ruht.

7. Form nach einem der Ansprüche 5 oder 6, **dadurch gekennzeichnet, dass** der sekundäre Tiegel (4) eine von einem thermisch schmelzbaren Stopfen (41) verschlossene Gussöffnung (40) aufweist.

8. Form nach einem der Ansprüche 5 bis 7, **dadurch gekennzeichnet, dass** sie aus einem Einwegmaterial ist.

9. Form nach einem der Ansprüche 5 bis 8, **dadurch gekennzeichnet, dass** sie mindestens ein Füllrohr (15a, 15b) umfasst, das sich zwischen dem oberen Teil der Form und einer unteren Region des Abdrucks derart erstreckt, dass ein aufsteigender Guss durchgeführt wird.

10. Vorrichtung zum aluminothermischen Schweißen von Gleisen, die eine Form (1) nach einem der Ansprüche 5 bis 9 und einen aluminothermischen Reaktionstiegel (2) umfasst, der auf der Form (1) platzierbar ist.

## Claims

1. A method for the aluminothermic welding of rails, wherein two rail ends to be welded are surrounded by a welding mould (1) defining a moulding cavity, comprising the steps of:
- triggering an aluminothermic reaction in a crucible (2);
- casting the metal derived from said reaction into the mould (1), so as to fill the moulding cavity starting from the foot of the rail;
**characterized in that**, after filling of the mould cavity, it comprises a step to trigger a second aluminothermic reaction above the rail head, and to cast the metal derived from said reaction into the moulding cavity in the region of the rail head.

2. The method according to claim 1, **characterized in that** the aluminothermic charge used in the second reaction differs from the aluminothermic charge used in the first reaction.

3. The method according to claim 2, **characterized in that** the aluminothermic charge used in the second reaction comprises at least one hardening agent, such as vanadium.

4. The method according to one of claims 1 to 3, **characterized in that** the triggering of the second aluminothermic reaction is performed by mere contacting of the aluminothermic charge with the molten metal derived from the first aluminothermic reaction.

5. A mould (1) for the aluminothermic welding of rails, adapted to fit over the two rail ends so as to form a moulding cavity (10), **characterized in that** it comprises a so-called secondary crucible (4) arranged above the region of the rail head so as to be fed with molten metal from the moulding cavity (10) via a secondary channel (42).

6. The mould according to claim 5, **characterized in that** the secondary crucible (4) rests on rims (110, 120) arranged in the mould.

7. The mould according to one of claims 5 or 6, **characterized in that** the secondary crucible (4) has a casting orifice (40) closed by a hot-melt plug (41).

8. The mould according to one of claims 5 to 7, **characterized in that** it is in single-use material.

9. The mould according to one of claims 5 to 8, **characterized in that** it comprises at least one filling pipe (15a, 15b) extending between the upper part of the mould and a lower region of the moulding cavity so as to perform uphill casting.

10. A device for the aluminothermic welding of rails comprising a mould (1) according to one of claims 5 to 9 and a crucible (2) for aluminothermic reaction suited to be placed on said mould (1).
